# EUROPEAN PATENT SPECIFICATION

(11) **EP 2 631 712 B1**
(45) Date of publication and mention of the grant of the patent: **28.03.2018**
(21) Application number: 13154090.8
(22) Date of filing: 05.02.2013
(51) Int. Cl.: G03B 17/40

(54) **Time lapse photography apparatus**
Zeitrafferfotografievorrichtung
Appareil de photographie le laps de temps

(30) Priority: 23.02.2012 GB 201203174
(43) Date of publication of application: 28.08.2013
(73) Proprietor: Lobster Pictures Limited, Bristol BS1 4ND (GB)
(72) Inventor: Allen, Robert, Bristol, BS1 4ND (GB); Honniball, John, Bristol, BS1 4ND (GB); Mckelvaney, Michael, Bristol, BS1 4ND (GB)
(74) Representative: Mears, Andrew David

(56) References cited:
- DE-A1- 4 011 678
- GB-A- 2 242 992
- US-A- 4 466 721
- US-A1- 2002 033 886
- US-A1- 2004 183 921

## Description

### Technical Field

The present application relates to a controller for controlling time lapse photography apparatus, and to time lapse photography apparatus incorporating such a controller.

### Background to the Invention

Time lapse photography is a process by which still photographs are taken at intervals and replayed at a faster rate (e.g. 30 pictures/second), giving the appearance that time is moving faster than it actually does. Time lapse photography has many applications, and is commonly used, for example, to monitor the progress of construction projects, and to record the growth of plants.

Time lapse photography requires a camera to be installed in a location, with a controller to trigger the camera to cause it to take pictures at predetermined intervals. The camera may be mounted in a fixed position, or may be mounted for controlled motion, e.g. along a predefined path. Typically the controller is programmed with a schedule of times or intervals at which photographs are to be taken prior to installation of the camera at the location to be photographed. Once programmed, it is difficult to adjust the schedule, as typically the controller must be reprogrammed manually, which involves removing the controller from the installed location. As well as the inconvenience and possible risk of physically removing the controller, there is also a likelihood that the camera will be moved from its original position, meaning that photographs taken after reprogramming of the controller may be of a different view than earlier photographs.

US 4,466,721 relates to a time lapse photography programmer that is controlled by a microcomputer. A keyboard permits a user to enter exposure sequence, exposure duration, and exposure interval data. The time between each successive exposure (exposure interval) can be programmed to be unique for each exposure sequence. Display means prompts a user to enter the exposure duration and interval data and displays the data entered by the user. For each exposure sequence, exposure interval data is loaded from a random access memory into a timer. After the timer has waited for a timer period defined by the exposure interval data, exposure duration data is loaded from the random access memory into the timer. A camera is then actuated to exposure film, in response to the timer, for the time period defined by the exposure duration data. At the end of each exposure, the process is repeated for each additional exposure sequence which has been programmed. An external trigger is provided to override the timer and effect an exposure immediately.

US2004/0183921 relates to an image acquiring device in which an imaging portion performs imaging of a subject. A time lapse imaging condition setting portion sets a time lapse imaging condition including at least an exposure time and an imaging interval, prior to the imaging of the subject by the imaging portion. A determining portion determines a contradiction of the time lapse imaging condition set by the time lapse imaging condition setting portion according to a predetermined criterion. A presenting portion presents at least information relating to the contradiction of the time lapse imaging condition based on a determined result by the determining portion.

US2002/0033886 relates to an electronic camera system. In the disclosed system, when a shutter button of an electronic camera is depressed, the electronic camera photographs a subject and the photographed image data is stored into a main storage device of the electronic camera. Upon receiving a photography command from a computer connected to the electronic camera, a check is made to determine whether the main storage device of the electronic camera still holds image data to be processed. If the main storage device still holds image data to be processed, then an error signal is sent to a device from which the photography command is issued. If the main storage device does not hold image data to be processed, then the electronic camera photographs a subject and the photographed image is stored into the main storage device, then, a notice of normal termination is sent to a device from which the photography command is issued.; If the main storage device still holds image data to be processed, then the compressing, saving, or transferring of the image data in the main storage device is carried out on a predetermined data volume basis.

### Summary of Invention

The present application relates to a controller for time lapse photography apparatus, and to time lapse photography apparatus incorporating such a controller. The controller includes a processor, a clock/calendar module and a radio transceiver module. The radio transceiver module is configured to receive commands from a user of the controller to program or reprogram a shooting schedule and a shooting interval. The processor receives a signal from the clock/calendar module and outputs a trigger signal to trigger as shutter of a camera in accordance with the programmed schedule and interval. The use of a radio transceiver module in the controller facilitates remote programming and reprogramming of the shooting schedule and shooting interval.

According to a first aspect of the present invention there is provided a controller for controlling time lapse photography apparatus, the controller comprising: a processor; a clock; and a trigger interface, wherein the processor is configured to receive a clock signal from the clock and to output a signal to the trigger interface to trigger a camera of the time lapse photography apparatus in accordance with a schedule which defines times or intervals at which photographs are to be taken, characterised in that the controller further comprises a radio transceiver configured to receive commands from a remote location and to pass the commands so received to the processor to configure the schedule with times or intervals at which photographs are to be taken.

The radio transceiver may be configured to receive commands via a wireless telecommunications network.

The radio transceiver may be configured to receive commands via Short Message Service (SMS) text messages.

The radio transceiver may be further configured to transmit messages to the remote location.

The controller may further comprise an information interface for receiving status information relating to the camera of the time lapse photography apparatus.

The information interface may comprise a counter for counting the number of photographs taken by the camera of the time lapse photography apparatus.

For example, the counter may be configured to receive a flash trigger signal generated by the camera and to count the number of such flash trigger signals received.

The processor may be configured to compare the number of flash trigger signals counted by the counter to a number of photographs expected in accordance with the schedule and to generate a fault message if a discrepancy exists between the numbers.

The controller may be configured to monitor a status of a battery of the camera.

The controller may be configured to monitor a status of a memory of the camera.

The controller may further comprise a peripheral control interface, the peripheral control interface being connected to the processor and configured to control operation of peripheral components of the time lapse photography apparatus.

The controller may further comprise a battery for powering the processor in the event of interruption of a power supply of the controller.

The processor may be configured to monitor a power supply to the controller.

According to a second aspect of the invention there is provided time lapse photography apparatus comprising a camera and a controller according to the first aspect.

### Brief Description of the Drawings

Embodiments of the invention will now be described, strictly by way of example only, with reference to the accompanying drawings, of which:
Figure 1 is a schematic block diagram showing time lapse photography apparatus incorporating a camera and a controller; and
Figure 2 is a schematic block diagram showing the apparatus of Figure 1 upgraded to implement additional functionality.

### Description of the Embodiments

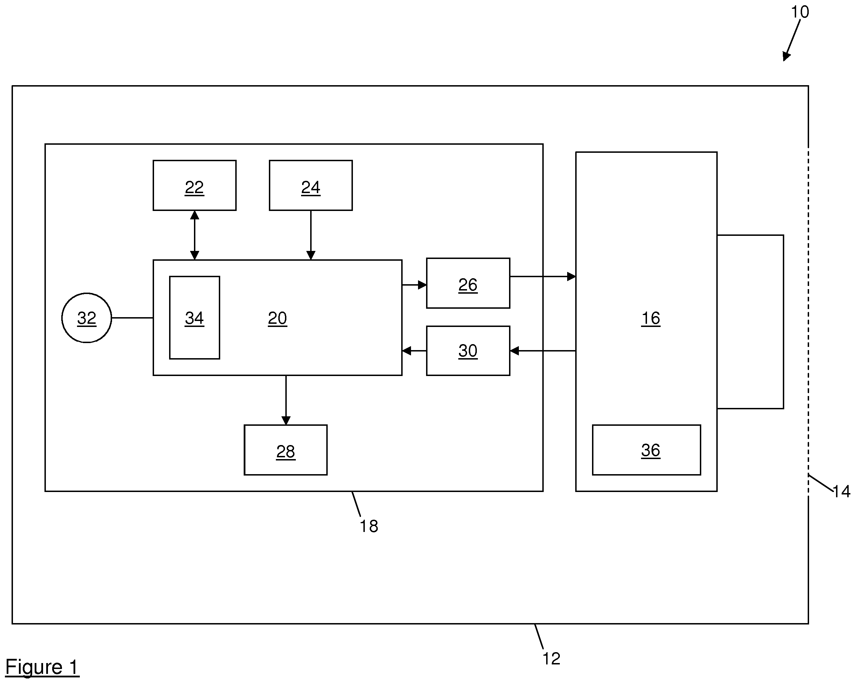

Referring first to the functional block diagram of Figure 1, an apparatus for time lapse photography is generally designated as 10. The apparatus 10 has a housing 12 which has at a front portion thereof a transparent window 14 of glass, plastics or any other suitable material.

A camera 16 such as a digital single lens reflex (SLR) camera is mounted within the housing 12, with its lens facing towards the transparent window 14 such that light entering the housing 12 can enter the lens of the camera 16. A controller 18 is also housed within the housing 12. The construction and operation of the controller 18 will be described in more detail below.

The housing 12 has a sealable opening to permit access to the camera 16 and the controller 18. When this opening is closed and sealed the closed housing 12 constitutes a weatherproof enclosure for the camera 16 and the controller 18, protecting the camera 16 and the controller 18 from the elements, animals and the like when installed in a location to be photographed.

The controller 18 is configured to trigger the camera 16 at intervals defined by a schedule, so as to cause the camera 16 to take still photographs at predetermined times, thereby generating a sequence of images which, when viewed at a higher rate than that at which the individual images were taken by the camera 16, give the impression of a moving sequence of images.

The controller 18 includes a processing unit 20 such as a microcontroller. The processing unit 20 is connected to a clock/calendar module 22 and to a radio transceiver module 24.

The processing unit 20 is also connected to a trigger interface module 26, which is in turn connected to a shutter control port of the camera 16, by means of which a shutter of the camera 16 can be triggered, and to a peripheral control interface unit 28, by means of which additional components of the apparatus 10 may be controlled, as will be described in more detail below.

A camera information interface module 30 is provided between the processing unit 20 and the camera 16, by means of which information relating to the status of the camera 16 can be provided to the processing unit 20, as will be described in more detail below.

The controller 18 is powered by an external power supply, which may be, for example, a power supply from a mains electrical outlet on the site at which the apparatus 10 is installed. Alternatively, the apparatus 10 may be provided with or connected to a renewable energy source such as a photovoltaic panel or a wind turbine. A back-up battery 32 may also be provided, to power the processing unit 20 in the event of failure of the main power supply. The back-up battery 32 may also power the clock/calendar module 22 and the radio transceiver module 24 in the event of failure of the main power supply.

The controller 18 includes non-volatile memory 34 in which a schedule and interval for triggering the camera 16 (also referred to as the "shooting schedule" and "shooting interval") is stored. The non-volatile memory 34 may be integral to the processor 20, or may be external to the processor 20.

In one embodiment the radio transceiver module 24 is a transceiver for communicating with a wireless network such as a GSM mobile telephone network. The radio transceiver module 24 has its own Subscriber Identity Module (SIM), and thus its own telephone number, and is configured to receive and transmit Short Message Service (SMS) text messages from and to a mobile telephone of a user of the apparatus 10.

Additionally or alternatively, the radio transceiver module 24 may be configured to communicate with a wireless network using other communications protocols or standards such as General Packet Radio Service (GPRS) and to transmit and receive text messages to and from the user's mobile telephone using such a communication protocol or standard.

Text messages received by the radio transceiver module 24 can be used to query the status of the apparatus 10, configure or reconfigure the shooting schedule and shooting interval, or reset the camera 16, as will be described in detail below. Text messages sent by the radio transceiver module 24 can be used to report the status of the apparatus 10 and shooting schedule to the user, and to report diagnostic information to the supplier of the apparatus 10, as will be described in more detail below. Such messages may either be sent as replies to messages received from the user, or may be sent asynchronously in the case of a fault occurring in the apparatus 10.

The controller 18 is programmed to recognise a master telephone number contained in text messages received by the radio transceiver unit 24. This master telephone number will always be recognised by the controller 18, to permit remote diagnostics and master resetting of the apparatus 10 by the supplier of the apparatus 10 in the event of a failure.

As an alternative, the controller 18 may be programmed to recognise a master prefix in text messages received by the radio transceiver unit 24, and to permit diagnostic access and master resetting of the apparatus 10. The master prefix may be, for example, a six digit code known only to the supplier of the apparatus 10. This arrangement has the advantage that any telephone number can be used to transmit master commands to the apparatus 10, provided that the master prefix is included in text messages transmitted to the apparatus 10, which reduces the administrative burden on the supplier in having to maintain a dedicated telephone number for issuing master commands to the apparatus 10. Additionally, this approach improves security by removing any risk of the master telephone number being "spoofed", and reduces the risk of unauthorised persons transmitting master commands to the device using a spoofed master telephone number that has become known from information appearing on the user's bill for the SIM in the radio transceiver module 24.

The controller 18 is also programmed, during an initial configuration of the controller 18, to recognise a user telephone number from which shooting schedule and shooting interval configuration messages may be received. This programming of the controller 18 to recognise the user telephone number may be achieved in a number of different ways.

For example, prior to delivery of the apparatus 10 a text message may be transmitted from the master telephone number to the apparatus 10, with this text message containing a command that causes the controller 18 to store a telephone number provided by the user.

Alternatively, the apparatus 10 may be supplied to the user with a secret key such as a predefined alphanumeric string that is pre-programmed into the controller 18. The user then sends a text message including the secret key to the apparatus 10, which when received by the controller 18 via the radio transceiver unit 24 causes the controller 18 to bind to the number from which the message was sent, such that only configuration messages received from that number will be accepted and acted upon by the controller 18. In the event that the user wishes to change the telephone number used to configure the schedule, a message including the secret key may be sent to the apparatus 10 to cause the controller 18 to bind to the new number.

Once the controller 18 has been programmed to recognise a user telephone number in this way, the user can transmit text messages to the apparatus 10 to configure or reconfigure the shooting schedule. A simple format is used for configuration messages sent by the user to configure or reconfigure the shooting schedule. For example, a configuration or reconfiguration message may include the word **SHOOT** followed by day and time settings. An exemplary shooting schedule configuration message may read as follows:
**SHOOT***sun08001900*mon08001915*tue08001900*wedZERO*thuZERO* fri00002359*sat12001400

This shooting schedule configuration message programs the controller 18 to cause photographs to be taken between the hours of 8am and 7pm on Sundays, between 8am and 7.15pm on Mondays, between 8am and 7pm on Tuesdays. No photographs are taken on Wednesdays or Thursdays, but photographs are taken between the hours of midnight and 11.59pm on Fridays and between the hours of midday and 2pm on Saturdays.

On receipt of a shooting schedule configuration message the radio transceiver 24 transmits the message to the processing unit 20, which interprets it and records the shooting schedule in the non-volatile memory 34. The processing unit 20 then generates a confirmation message including an identifier of the apparatus 10 and confirmation of the programmed shooting schedule, such as
LPL123456 I am shooting sun08001900, mon08001915, tue08001900, wedZERO, thuZERO, fri00002359, sat12001400
to confirm that the shooting schedule has been received and processed by the processing unit 20, and this confirmation message is transmitted by the radio transceiver unit 24 to the user's telephone.

It will be noted that the shooting schedule configuration message only configures the times between which photographs will be taken. In order to configure or reconfigure the intervals at which photographs should be taken within the scheduled times, the user must transmit an interval configuration message to the text message 10. Again, the interval configuration message uses a simple format. For example, an interval configuration or reconfiguration message may include the word **INTERVAL** followed by a shooting interval in seconds. An exemplary interval configuration message may read as follows:
INTERVAL 900

This interval configuration message programs the controller 18 to cause photographs to be taken at intervals of 900 seconds during the scheduled shooting times.

On receipt of an interval configuration message the radio transceiver 24 transmits the message to the processing unit 20, which interprets it and records the shooting interval in the non-volatile memory 34. The processing unit 20 then generates a confirmation message including an identifier of the apparatus 10 and confirmation of the programmed shooting interval such as
LPL123456 Interval is 900 seconds
to confirm that the shooting interval has been received and processed by the processing unit 20, and this confirmation message is transmitted by the radio transceiver unit 24 to the user's telephone.

Recording the programmed shooting schedule and the programmed shooting interval in the non-volatile memory 34 ensures that in the event of disruption to the external power supply of the controller 18, e.g. as a result of a power cut, the shooting schedule and shooting interval are retained, such that when the power supply is restored scheduled shooting can be resumed without user intervention (although photographs scheduled during the disruption to the power supply may not be taken).

The processing unit 20 periodically receives a signal from the clock/calendar module 22 which provides the date, time of day and, optionally, the day of the week. Where the clock/calendar module does not provide the day of the week, the processing unit 20 may calculate the day of the week from the date provided by the clock/calendar module 22. The processing unit 20 uses the signal received from the clock/calendar module 22 to track the day of the week and the time, and transmits a signal at each shooting interval within the scheduled shooting time to the trigger interface 26 to cause the shutter of the camera 16 to be triggered to take a photograph. Thus, the camera 16 is triggered in accordance with the programmed shooting schedule and shooting interval.

The clock/calendar module 22 has its own long-life back-up battery, which ensures that in the event of disruption to the external power supply of the controller 18 the correct date week and time are maintained. This ensures that on resumption of the power supply scheduled shooting can be resumed correctly.

The clock/calendar module 22 is programmed with the correct time and date prior to delivery to the user, and may be reprogrammed by means of a message received from the master telephone number, to reset the clock/calendar module 22 to the correct time and date if necessary, e.g. in the event of disruption to both the external power supply and the back-up battery of the clock/calendar module 22, or to accommodate events such as the beginning and end of daylight saving time, British summer time and the like.

The user of the apparatus 10 is able to send text messages to the apparatus 10 to query the programmed shooting schedule and shooting interval. Such query messages use a simple format. For example, a shooting schedule query may include only the word **SHOOT?.** This shooting schedule query message is received by the radio transceiver unit 24 and passed to the processing unit 24, which generates and returns a message including an identifier of the apparatus 10 and confirmation of the programmed shooting schedule such as
LPL123456 I am shooting sun08001900, mon08001915, tue08001900, wedZERO, thuZERO, fri00002359, sat12001400
to report the programmed shooting schedule. This reporting message is transmitted by the radio transceiver unit 24 to the user's telephone.

Similarly, a shooting interval query may include only the word **INTERVAL?**. This shooting interval query message is received by the radio transceiver unit 24 and passed to the processing unit 24, which generates and returns a message including an identifier of the apparatus 10 and confirmation of the programmed shooting interval such as
LPL123456 Interval is 900 seconds
to report that the programmed shooting interval, and this reporting message is transmitted by the radio transceiver unit 24 to the user's telephone.

It will be appreciated that the use of SMS text messages by the user to program and query the apparatus 10 and by the apparatus 10 to report to the user provides a simple, convenient and reliable interface for controlling the apparatus 10.

The processing unit 20 is configured to poll the camera 16, periodically or in response to a user query message, to request details of the status of the camera 16, including the number of shots taken, power status and temperature.

To do this the processing unit 20 transmits a polling message to the camera information interface module 30. The camera information interface module 30 includes a counter that is connected to a flash trigger connection of the camera 16. Every time the shutter of the camera 16 is triggered, a signal is sent to the flash trigger connection. If a flash were connected to the camera this signal would cause the flash to be triggered. The counter of the camera information interface module 30 is incremented on each flash trigger signal, and thus maintains a count of the number of shots taken by the camera 16, which can be reported to the processing unit 20.

The number of shots taken by the camera 16 can simply be reported to the user on request in a suitable reporting message generated by the processing unit 20 and transmitted to the user's telephone via the radio transceiver unit 24.

The number of shots taken by the camera 16 can also be used to detect failure of or faults with the camera 16. The processing unit 20 is able to determine, from the programmed shooting schedule and shooting interval, the number of shots that should have been taken in a given period, e.g. the time that has elapsed since the last poll of the camera 16. This calculated number is compared by the processing unit 20 to the reported number of shots taken. If the reported number of shots taken is lower than the calculated number of shots taken, there may be a fault with the camera 16 which is preventing the shutter from being triggered correctly. In this case the processing unit 20 may generate a fault message and transmit this message to the user's telephone via the radio transceiver unit 24.

The counter of the camera information interface 30 can be reset remotely by the user, by sending a counter reset message to the apparatus 10. Such a message is received by the radio transceiver unit 24 and passed on to the processing unit 20, which in turn transmits a signal to the camera information interface 30 to cause the counter to be reset. Once the counter has been reset, the processing unit 20 may generate a confirmation message to be transmitted to the user by the radio transceiver unit 24.

The camera 16 is typically powered by the external power supply, but may alternatively or additionally have its own internal high capacity battery. Where such a battery is provided, the camera information interface module 30 is configured to monitor the status of this battery, for example by monitoring the battery voltage. This battery status (e.g. voltage) is transmitted by the camera information interface module 30 to the processing unit 20 on request, and the processing unit is able to take appropriate action. For example, the processing unit 20 may simply generate a battery status message for transmission to the user via the radio transceiver unit 24. The processing unit 20 may also be configured to generate a warning message for transmission to the user if the battery capacity falls below a predetermined threshold level, e.g. 20 per cent.

Additionally, the camera 16 or the camera information interface module 30 may include a temperature sensor, such that the temperature of the camera 16 can be queried and reported by the processing unit 20 when necessary.

Photographs taken by the camera 16 are stored on removable memory 36 within the camera 16, for example on one or more removable compact flash or SD (secure digital) memory cards. The removable memory 36 of the camera 16 has a finite capacity for storing photographs, and thus it is necessary for the user to visit the apparatus 10 periodically to download the photographs from the memory 36.

The camera information interface unit 30 may be configured to monitor the remaining storage capacity of the memory 36, and the processing unit 20 may be configured to generate a warning message for transmission to the user when the remaining storage capacity of the memory 36 reaches a predetermined threshold level, e.g. 20 per cent remaining capacity, or 1 day's worth of photographs remaining.

Alternatively or additionally, the processing unit 20 may be configured to calculate the remaining memory capacity based on the counted number of shots taken by the camera 16. In this case, the processing unit 20 may be programmed with an initial capacity value for the memory 36 and a size value for a photograph. Based on the amount of memory required to store a single photograph (i.e. the size value) the processing unit 20 may calculate an approximate capacity of the memory 36 in terms of a number of photographs, and may generate a warning message for transmission to the user when the remaining storage capacity of the memory 36, calculated by the processor 20 by multiplying the number of photographs taken by the size value and subtracting the result from the initial capacity value, reaches a predetermined threshold level, e.g. 20 per cent remaining capacity, or 1 day's worth of photographs remaining. In this case a reset parameter would be included such that the remaining capacity value can be reset to the initial capacity value when necessary, e.g. when the memory 36 has been emptied of photographs.

The processing unit 20 may also be configured to generate a warning message for transmission to the user when the available memory 36 is full. The processing unit 20 may use information received from the camera information interface unit 30 to determine when the memory 36 is full, or may deduce that the memory 36 is full based on the number of shots counted.

If the memory 36 is full the camera 16 may be prevented from taking any further shots, and so a difference between the counted number of shots taken and the number of shots scheduled to be taken may indicate that the memory 36 is full. Thus, before generating a generic camera fault message the processing unit 20 may first poll the camera information interface unit 30 for memory status (either directly, or indirectly by comparing the number of shots taken, as reported by the camera information interface unit 30, to the capacity of the memory 36 in terms of number of shots) to determine if the fault condition is due to the memory 36 being full.

To facilitate downloading of photographs from the memory 36 of the camera 16, in some embodiments the housing 12 is provided with a connector such as a Universal Serial Bus (USB) connector that is connected directly or indirectly to the memory 36 of the camera 16 (e.g. the USB connector of the housing 12 may be connected to a USB socket of the camera), such that the user can connect a computer or similar device to the connector to download the photographs from the memory 36 of the camera 16 without having to remove the camera 16 from the housing 12. However, it will be appreciated that such a connector is not essential; if the connector is not provided the user can simply remove the camera 16 from the housing 12 and either connect a computer or similar device to the USB socket of the camera 16, or remove the memory 36 from the camera 16 and download the photographs to a computer or other device directly from the memory 36.

To ensure that the camera 16 does not attempt to take photographs while photographs are being downloaded from the memory 36 of the camera 16, the user is able to send a message including a pause command to the apparatus 10 to temporarily interrupt the shooting schedule. Once the photographs have been downloaded from the memory 36 the user sends a message including an unpause command to the apparatus 10 to resume shooting in accordance with the programmed shooting schedule and shooting interval.

The processing unit 20 may be configured to generate a warning message for transmission to the user if no unpause command has been received within a predetermined time period (e.g. one hour) of receipt of a pause command. The warning message may be re-transmitted periodically until an unpause message is received, with the frequency of the message changing as the time since the pause command was received increases. For example, the warning message may be transmitted every hour for the first twenty-four hours after the pause command was received, and subsequently the message may be transmitted daily.

As well as polling the camera information interface unit 30 for status information in response to specific user requests, the processing unit 20 also polls the camera information interface unit 30 periodically, e.g. every hour, to ensure that the camera is functioning properly. In the event that a camera fault is detected, e.g. on the basis of a comparison of the number of shots scheduled against the number of shots actually taken, the processor 20 may generate a fault message for transmission to the user via the radio transceiver unit 22. The fault message may also be transmitted to the master telephone number, so that the supplier of the apparatus 10 is notified of the fault. The user or supplier may then transmit a message containing a camera reboot command to the apparatus 10, to cause the processing unit 20 to reboot the camera 16.

The apparatus 10 may also be regularly polled (e.g. every hour) by the master telephone number, which transmits a message containing a controller status query, to ensure that the controller 18 is functioning correctly. This polling of the apparatus 10 may be used, for example, to monitor the main power supply of the apparatus 10, for example.

In response to the controller status query the processing unit 20 generates a status update message which is transmitted to the master number by the radio transceiver unit 24. If no status update message is received at the master number within a predetermined time, e.g. 5 minutes, of a controller status query, the controller may have developed a fault, or gone offline due to a power failure or the like. In such circumstances the controller 18 may need to be rebooted, and so the master number transmits a message containing a controller reboot command to the apparatus 10 to cause the processing unit 20 to reboot the controller 18. The master number may follow up the command with a further controller status query a short time (e.g. five minutes) later, to ensure that following the reboot the controller 18 is functioning correctly.

The apparatus 10 including the camera 16 and controller 18 provides a compact, simple reliable and low cost solution for time lapse photography applications, allowing a user to configure and reconfigure the shooting schedule and shooting interval remotely through a simple SMS text message command line interface. Fault reporting and diagnostic information can also be provided remotely, so the user need only visit the apparatus in situ to download photographs.

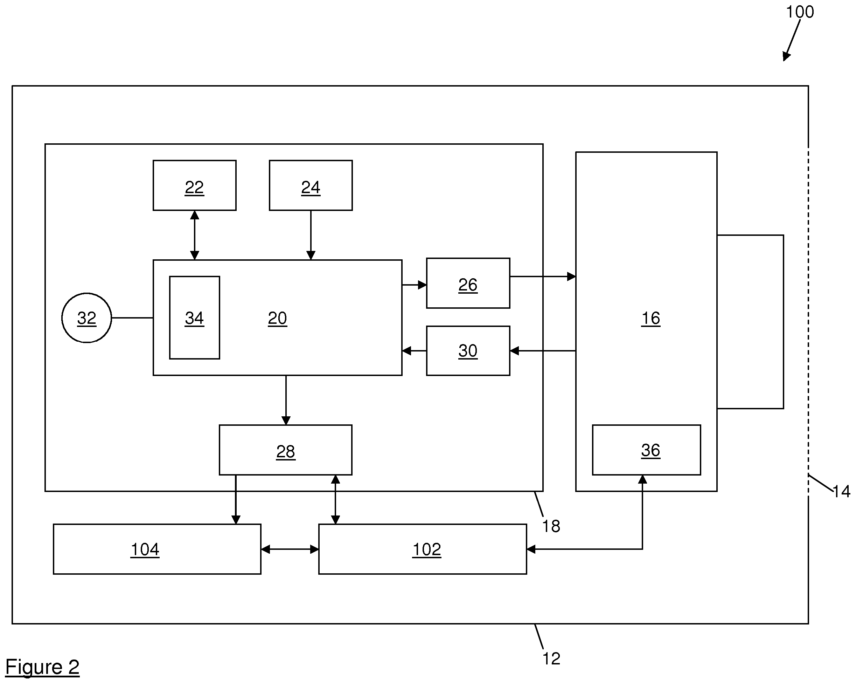

The use of the controller 18 also provides a straightforward upgrade path for the apparatus 10 to incorporate more sophisticated functionality, as will be described below with reference to Figure 2.

Whilst the apparatus 10 is sufficient for many time lapse photography needs, sophisticated users and projects may warrant or require additional functionality, such as automatic uploading of photographs from the apparatus 10 to a remote server such as a web server. The apparatus 10 can be readily upgraded to include such functionality, as controller 18 is able to interface with and control additional components that may be required to implement such functionality. Figure 2 is a schematic block diagram of an apparatus 100 that has been upgraded in this way. As the apparatus 100 of Figure 2 is an upgraded version of the apparatus 10 of Figure 1, elements of the apparatus 10 are also present the apparatus 100, and these elements are denoted in Figure 2 by the reference numerals used in Figure 1.

To provide the functionality of automated uploading of images to a remote server two additional components are required, namely a computer 102 for downloading images from the memory of the camera 16, and a router 104 for transmitting the images from the computer to the remote server over a wireless network such as a GSM mobile telephone network.

The computer 102 and the router 104 can simply be added to the apparatus 10 of Figure 1 to form the upgraded apparatus 100 of Figure 2. The computer 102 is connected to the memory 36 of the camera 16, e.g. by a USB connection between the camera's USB socket and a USB connector of the computer 102, and is provided with software which, when executed, downloads the photographs stored in the memory 36 of the camera 16 to a memory of the computer for transmission to the remote server.

The router 104 is connected to the computer 102, and is configured to receive the photographs downloaded by the computer 102 and to transmit them to the remote server via the wireless network.

The computer 102 and the router 104 are controlled by the peripheral control interface unit 28, which is configured to receive signals from the processing unit 20 and to activate the computer 102 and the router 104 to cause the photographs to be downloaded from the memory 36 of the camera 16 and uploaded to the remote server in accordance with a user-defined schedule.

A power-on schedule for the computer 102 may be transmitted to the upgraded apparatus 100 by means of one or more SMS text messages in the same way that the shooting schedule and shooting interval are transmitted to the apparatus 10 of Figure 1, to cause the computer 102 to power on and download photographs from the memory 36 of the camera 16 for subsequent uploading to the remote server in accordance with the user-defined schedule. Alternatively, the power-on schedule and the shooting schedule and shooting interval may be received by router 104 of the apparatus 100 of Figure 2 via the wireless network. In this case, the schedules may be defined using a web interface or the like, rather than using a command line.

It will be appreciated that the computer 102 and the router 104 significantly increase the power consumption of the apparatus 100 as compared to the apparatus 10. In order to reduce the power consumption of the apparatus 100, the processing unit 18 may be programmed with a power schedule to cause the peripheral control interface unit 28 only to power up the computer 102 and the router 104 when they are required. For example, the power schedule may be designed to power up the computer 102 and the router 104 around ten minutes before a scheduled upload, to allow time for the computer and the router 104 to boot up before they are required to download the photographs from the memory 36 and upload the photographs to the remote server, and to power the computer 102 and the router 104 down immediately after the upload process has been completed. In this way, the computer 102 and the router 104 consume power only when they are actually operational.

It will be appreciated that where the apparatus 10 of Figure 1 has been upgraded to the apparatus 100 of Figure 2 certain features may not be necessary or desirable. Such features may be disabled by commands sent to the controller 18 from the master telephone number during an initial configuration of the upgraded apparatus 100.

Thus, the apparatus 10 provides a simple, compact, reliable and cost effective solution for time lapse photography applications that can readily be upgraded to meet more complex requirements.

## Claims

1. A controller (18) for controlling time lapse photography apparatus (10), the controller (18) comprising:
a processor (20);
a clock (22);
and
a trigger interface (26), wherein
the processor (20) is configured to receive a clock signal from the clock (22) and to output a signal to the trigger interface to trigger a camera (16) of the time lapse photography apparatus (10) in accordance with a schedule which defines times or intervals at which photographs are to be taken, **characterised in that** the controller (18) further comprises a radio transceiver (24) configured to receive commands from a remote location and to pass the commands so received to the processor (20) to configure the schedule with times or intervals at which photographs are to be taken.

2. A controller according to claim 1 wherein the radio transceiver is configured to receive commands via a wireless telecommunications network.

3. A controller according to claim 1 or claim 2 wherein the radio transceiver is configured to receive commands via Short Message Service (SMS) text messages.

4. A controller according to any one of the preceding claims wherein the radio transceiver is further configured to transmit messages to the remote location.

5. A controller according to any one of the preceding claims further comprising non-volatile memory for storing the schedule.

6. A controller according to any one of the preceding claims further comprising an information interface for receiving status information relating to a camera of the time lapse photography apparatus.

7. A controller according to claim 6 wherein the information interface comprises a counter for counting the number of photographs taken by the camera of the time lapse photography apparatus.

8. A controller according to claim 6 wherein the counter is configured to receive a flash trigger signal generated by the camera and to count the number of such flash trigger signals received.

9. A controller according to claim 7 wherein the processor is configured to compare the number of flash trigger signals counted by the counter to a number of photographs expected in accordance with the schedule and to generate a fault message if a discrepancy exists between the numbers.

10. A controller according to any one of the preceding claims wherein the controller is configured to monitor a status of a battery of the camera.

11. A controller according to any one of the preceding claim wherein the controller is configured to monitor a status of a memory of the camera.

12. A controller according to any one of the preceding claims further comprising a peripheral control interface, the peripheral control interface being connected to the processor and configured to control operation of peripheral components of the time lapse photography apparatus.

13. A controller according to any one of the preceding claims further comprising a battery for powering the processor in the event of interruption of a power supply of the controller.

14. A controller according to claim 13 wherein the processor is configured to monitor a power supply to the controller.

15. Time lapse photography apparatus (10) comprising a camera (16) and a controller (18) according to any one of the preceding claims

## Patentansprüche

1. Steuereinrichtung (18) zur Steuerung einer Zeitrafferphotographievorrichtung (10), wobei die Steuereinrichtung (18) aufweist:
einen Prozessor (20);
einen Taktgeber (22); und
eine Auslöseschnittstelle (26), wobei
der Prozessor (20) konfiguriert ist, ein Taktsignal vom Taktgeber (22) zu empfangen und ein Signal an die Auslöseschnittstelle abzugeben, um eine Kamera (16) der Zeitrafferphotographievorrichtung (10) gemäß einem Zeitplan auszulösen, der Zeiten oder Intervalle definiert, an denen Photographien aufgenommen werden sollen, **dadurch gekennzeichnet, dass** die Steuereinrichtung (18) ferner einen Funktransceiver (24) aufweist, der konfiguriert ist, Befehle von einer entfernten Stelle zu empfangen und die so empfangenen Befehle an den Prozessor (20) weiterzuleiten, um den Zeitplan mit Zeiten oder Intervallen, an denen Photographien aufgenommen werden sollen, zu konfigurieren.

2. Steuereinrichtung nach Anspruch 1, wobei der Funktransceiver konfiguriert ist, Befehle über ein drahtloses Kommunikationsnetzwerk zu empfangen.

3. Steuereinrichtung nach Anspruch 1 oder 2, wobei der Funktransceiver konfiguriert ist, Befehle über Kurznachrichtendienst- (SMS-) Textnachrichten zu empfangen.

4. Steuereinrichtung nach einem der vorhergehenden Ansprüche, wobei der Funktransceiver ferner konfiguriert ist, Nachrichten an die entfernte Stelle zu senden.

5. Steuereinrichtung nach einem der vorhergehenden Ansprüche, die ferner einen nichtflüchtigen Speicher zum Speichern des Zeitplans aufweist.

6. Steuereinrichtung nach einem der vorhergehenden Ansprüche, die ferner eine Informationsschnittstelle zum Empfangen von Statusinformationen aufweist, die eine Kamera der Zeitrafferphotographievorrichtung betreffen.

7. Steuereinrichtung nach Anspruch 6, wobei die Informationsschnittstelle einen Zähler zum Zählen der Anzahl der Photographien aufweist, die durch die Kamera der Zeitrafferphotographievorrichtung aufgenommen werden.

8. Steuereinrichtung nach Anspruch 6, wobei der Zähler konfiguriert ist, ein durch die Kamera erzeugtes Blitzauslösesignal zu empfangen und die Anzahl solcher empfangener Blitzauslösesignale zu zählen.

9. Steuereinrichtung nach Anspruch 7, wobei der Prozessor konfiguriert ist, die Anzahl der durch den Zähler gezählten Blitzauslösesignale mit einer Anzahl der Photographien zu vergleichen, die gemäß dem Zeitplan erwartet werden, und eine Fehlermeldung zu erzeugen, wenn eine Diskrepanz zwischen den Anzahlen vorhanden ist.

10. Steuereinrichtung nach einem der vorhergehenden Ansprüche, wobei die Steuereinrichtung konfiguriert ist, einen Status einer Batterie der Kamera zu überwachen.

11. Steuereinrichtung nach einem der vorhergehenden Ansprüche, wobei die Steuereinrichtung konfiguriert ist, einen Status eines Speichers der Kamera zu überwachen.

12. Steuereinrichtung nach einem der vorhergehenden Ansprüche, die ferner eine Peripheriesteuerschnittstelle aufweist, wobei die Peripheriesteuerschnittstelle mit dem Prozessor verbunden und konfiguriert ist, den Betrieb von Peripheriekomponenten der Zeitrafferphotographievorrichtung zu steuern.

13. Steuereinrichtung nach einem der vorhergehenden Ansprüche, die ferner eine Batterie zur Stromversorgung des Prozessors im Fall einer Unterbrechung einer Stromversorgung der Steuereinrichtung aufweist.

14. Steuereinrichtung nach Anspruch 13, wobei der Prozessor konfiguriert ist, eine Stromversorgung der Steuereinrichtung zu überwachen.

15. Zeitrafferphotographievorrichtung (10), die eine Kamera (16) und eine Steuereinrichtung (18) nach einem der vorhergehenden Ansprüche aufweist.

## Revendications

1. Dispositif de commande (18) permettant de commander un appareil de prise de vues accélérées (10), ledit dispositif de commande (18) comprenant :
un processeur (20) ;
une horloge (22) ; et
une interface de déclenchement (26),
dans lequel
le processeur (20) est configuré pour recevoir un signal d'horloge provenant de l'horloge (22) et pour envoyer un signal à l'interface de déclenchement afin de déclencher un appareil photo (16) de l'appareil de prise de vues accélérées (10) en fonction d'un programme qui définit les heures ou les intervalles auxquels les photographies doivent être prises, **caractérisé en ce que** le dispositif de commande (18) comprend en outre un émetteur-récepteur radio (24) configuré de manière à recevoir des instructions provenant d'un emplacement distant et à faire passer les instructions ainsi reçues au processeur (20) afin de faire coïncider le programme avec les heures et les intervalles auxquels les photographies doivent être prises.

2. Dispositif de commande selon la revendication 1, dans lequel l'émetteur-récepteur radio est configuré de manière à recevoir des instructions par l'intermédiaire d'un réseau de télécommunications sans fil.

3. Dispositif de commande selon la revendication 1 ou 2, dans lequel l'émetteur-récepteur radio est configuré de manière à recevoir des instructions par l'intermédiaire de messages textes de Service de Messages Courts (SMS).

4. Dispositif de commande selon l'une quelconque des revendications précédentes, dans lequel l'émetteur-récepteur radio est en outre configuré de manière à transmettre des messages à l'emplacement distant.

5. Dispositif de commande selon l'une quelconque des revendications précédentes, comprenant en outre une mémoire non volatile destinée à stocker le programme.

6. Dispositif de commande selon l'une quelconque des revendications précédentes, comprenant en outre une interface d'informations permettant de recevoir des informations de statut relatives à l'appareil photo de l'appareil de prise de vues accélérées.

7. Dispositif de commande selon la revendication 6, dans lequel l'interface d'informations comprend un compteur permettant de compter le nombre de photographies prises par l'appareil photo de l'appareil de prise de vues accélérées.

8. Dispositif de commande selon la revendication 6, dans lequel le compteur est configuré de manière à recevoir un signal de déclenchement du flash généré par l'appareil photo et à compter le nombre desdits signaux de déclenchement de flash reçus.

9. Dispositif de commande selon la revendication 7, dans lequel le processeur est configuré de manière à comparer le nombre de signaux de déclenchement du flash comptés par le compteur avec un nombre de photographies attendues en fonction du programme et à générer un message d'erreur s'il existe une différence entre ces deux nombres.

10. Dispositif de commande selon l'une quelconque des revendications précédentes, dans lequel le dispositif de commande est configuré de manière à surveiller un statut d'une batterie de l'appareil photo.

11. Dispositif de commande selon l'une quelconque des revendications précédentes, dans lequel le dispositif de commande est configuré de manière à surveiller le statut d'une mémoire de l'appareil photo.

12. Dispositif de commande selon l'une quelconque des revendications précédentes, comprenant en outre une interface de commande périphérique, ladite interface de commande périphérique étant connectée au processeur et configurée de manière à commander le fonctionnement de composants périphériques de l'appareil de prise de vues accélérées.

13. Dispositif de commande selon l'une quelconque des revendications précédentes, comprenant en outre une batterie destinée à alimenter en courant le processeur, dans le cas d'une interruption d'une alimentation électrique du dispositif de commande.

14. Dispositif de commande selon la revendication 13, dans lequel le processeur est configuré de manière à surveiller une alimentation en courant du dispositif de commande.

15. Appareil de prise de vues accélérées (10) comprenant un appareil photo (16) et un dispositif de commande (18) selon l'une quelconque des revendications précédentes.
